# EUROPEAN PATENT SPECIFICATION

(11) **EP 2 452 072 B1**
(45) Date of publication and mention of the grant of the patent: **19.12.2018**
(21) Application number: 10736955.5
(22) Date of filing: 06.07.2010
(51) Int. Cl.: F04B 35/04

(54) **LINEA COMPRESSOR**
LINEARKOMPRESSOR
COMPRESSEUR LINÉAIRE

(30) Priority: 08.07.2009 BR PI0902557
(43) Date of publication of application: 16.05.2012
(73) Proprietor: Whirlpool S.A., 04578-000 São Paulo - SP (BR)
(72) Inventor: LILIE, Dietmar Erich Bernhard, 89204-060 Joinville - SC (BR); COUTO, Paulo Rogério Carrara, 89206-500 Joinville - SC (BR); TAKEMORI, Celso Kenzo, 89203-040 Joinville - SC (BR); BERWANGER, Egídio, Areia Branca - RN-59655-000 (BR)
(74) Representative: Patentanwälte Geyer, Fehners & Partner mbB
(86) International application number: PCT/BR2010/000224
(87) International publication number: WO 2011/003163

(56) References cited:
- WO-A1-02/090773
- WO-A1-2006/069884
- WO-A2-02/066830
- GB-A- 1 222 425
- US-A- 5 779 455

## Description

### Field of the Invention

The present invention refers to a construction for a linear compressor and, more particularly, to a mounting arrangement for a linear compressor of the type generally used in small refrigeration systems, which allows distributing the forces transmitted from the compressor components to the shell to which the compressor is mounted. The present compressor can be constructed to be used not only in refrigeration systems of refrigeration appliances in general, but also for refrigerating the components of compact electronic appliances or other applications that require miniaturization of the compressor unit.

### Prior Art

Linear compressors are known to be applied in refrigeration systems, and their construction has been object of researches generally aiming to improve the efficiency thereof. The linear compressor is basically a high vibration machine comprising a piston which is axially displaced in the interior of a compression chamber, in order to compress a determined mass of refrigerant gas of the refrigeration system during a refrigeration cycle of this system. See US5779455, disclosing the features of the preamble of claim 1. In the construction illustrated and described in Patent Application WO07/118295 of the same applicant, it is presented a compact compressor of the type to be particularly, but not exclusively, utilized to refrigerate electronic systems, said compressor generically comprising a generally hermetic shell 10 presenting a typical cylindrical shape; a cylinder 20, affixed to the shell 10 and defining a compression chamber 21 in the interior of which a piston 30 is axially displaced, in a reciprocating movement, during the operation of the compressor; a linear electric motor 40 mounted to the shell 10; an actuating means 50 operatively coupling the piston 30 to the linear electric motor 40, so as to make the latter displace the piston 30 in a reciprocating movement inside the compression chamber 21, said actuating means 50 being coupled to the piston 30 by means of a coupling means 60, in the form of an elastic means 60a, designed so that the actuating means 50 and the piston 30 are displaced in phase opposition during the operation of the compressor, as exposed hereinafter.

This embodiment requires a slide bearing M to guide the movable part of the motor in the interior of the shell during the compressor operation, preventing lateral movements of said movable part of the motor from unbalancing the compressor unit. However, this type of bearing generates friction and presents a limited lifetime as a function of its wear, since the compressors of the type considered herein are designed not to use oil for lubricating parts in relative movement. Another problem related to the use of slide bearings is the generation of noise; the bearing can generate noise in cases in which contact occurs between the movable parts.

Considering the reduced dimensions available in compact compressors, particularly for application in refrigeration systems of electronic appliances, it is desirable to provide a constructive solution which guarantees miniaturizing the compressor unit and, preferably, suppressing the slide bearings, minimizing the existence of parts with relative movement and in contact with each other in the compressor, and simplifying the construction thereof, without compromising the limitations established for dimensioning the linear compressor.

### Summary of the Invention

As a function of the drawback commented above and other disadvantages of the known constructive solutions, it is one of the objects of the present invention to provide a linear compressor which allows minimizing or even annulling the effects of the lateral loads actuating on the reciprocating parts of the compressor in the interior of the shell thereof, preventing the movable components of the compressor unit, particularly the assembly formed by the actuating means and by the movable part of the motor, from colliding with the compressor shell, without using slide bearings or other means that can cause contact between the movable parts of the compressor.

Another object of the present invention is to provide a compressor as cited above and which does not generate noise during its operation.

Another object of the present invention is to provide a compressor as cited above and which allows, in a simple manner, the construction of a compact linear compressor (of the type disclosed in WO07/118295) which annuls, at least in part, the effects of the lateral loads actuating on the piston in the interior of the compression chamber, minimizing the friction between said parts.

A further object of the present invention is to provide a compressor as cited above and which permits, in a simple manner, the construction of a compact linear compressor, without requiring the use of lubricant oil between the parts with relative movement.

Another object of the present invention is to provide a linear compressor as cited above and whose construction permits maintaining the dimensions of the compressor shell, as well as the overall weight of the latter with reduced values.

The present invention refers to a linear compressor of the type which comprises: a shell which internally affixes a cylinder defining a compression chamber in whose interior a piston is provided; a linear electric motor having a fixed part affixed internally to the shell and a movable part reciprocating in relation to the fixed part; an actuating means affixed to the movable part of the linear electric motor, so as to be driven by said movable part in a reciprocating movement; a coupling means, coupling the actuating means to the piston, so that said actuating means and piston are displaced in a reciprocating movement during the compressor operation.

According to the invention, which is as defined in claim 1, the compressor comprises a supporting elastic means connecting the actuating means to the shell and presenting a radial rigidity capable to support the lateral loads actuating on the assembly defined by the movable part of the linear electric motor and by the actuating means, so as to minimize axial misalignments between said fixed and movable parts of the linear electric motor, resulting from the effects of said lateral loads, said supporting elastic means presenting a minimum axial rigidity, so as to allow the desired displacement of the piston and of the actuating means.

According to the present invention, the coupling means is an elastic means which couples the actuating means to the piston, the supporting elastic means presents a minimum axial rigidity, so as to allow the piston and the actuating means to present a displacement in phase opposition.

According to a particular aspect of the present invention, in which the piston is directly coupled to the elastic means, the compressor comprises an additional supporting elastic means connecting the piston to the shell and presenting a radial rigidity capable to support the lateral loads actuating on the piston, so as to minimize axial misalignments of the piston in relation to the compression chamber, resulting from the effects of said lateral loads, said additional supporting elastic means presenting a minimum axial rigidity, so as to allow the desired displacement, in phase opposition, of the piston and of the actuating means.

In another aspect of the present invention, the compressor comprises an additional supporting elastic means connecting, to the shell, an end portion of the elastic means, adjacent to the piston and presenting a radial rigidity capable of supporting the lateral loads actuating on said end portion of the elastic means, so as to minimize axial misalignments of the end portion of the elastic means in relation to the compression chamber, resulting from the effects of said lateral loads, said additional supporting elastic means presenting a minimum axial rigidity, so as to allow the desired displacement, in phase opposition, of the piston and of the actuating means.

Still another aspect of the present invention is to provide a linear compressor as defined above and in which the piston is rigidly coupled to the elastic means, or said piston is coupled to the elastic means by an articulation means.

### Brief Description of the Drawings

The invention will be described below, with reference to the enclosed drawings, given by way of example of possible embodiments of the present invention and in which:
Figure 1 schematically represents a longitudinal sectional view of a construction of the linear compressor described and illustrated in WO07/118295;
Figure 2 represents, in a simplified and rather schematic way, a longitudinal sectional view of a compressor of the type illustrated in figure 1, but presenting a first embodiment of the present invention for the supporting elastic means;
Figure 3 schematically represents a constructive variant for mounting the piston to the elastic means, for the solution illustrated in figure 2, using an additional supporting elastic means;
Figure 4 schematically represents a view such as that of previous figures, for a second constructive option of the present invention;
Figure 5 schematically represents a constructive variant for mounting the piston to the elastic means, for the solution illustrated in figure 4;
Figure 6 schematically represents a constructive option for the supporting elastic means of the present invention, of the type illustrated in figures 2 to 5;
Figure 7 schematically represents a view such as that of the previous figures 1 to 5, for a third constructive option of the present invention;
Figure 8 schematically represents a lateral view of a second constructive option for the supporting elastic means;
Figure 9 schematically represents a supporting elastic means for the second constructive option illustrated in figures 7 and 8; and
Figure 10 schematically represents a view such as that of figure 8, for a fourth constructive option of the present invention, indicating, in continuous lines, an expansion condition of the supporting elastic means and, in dashed lines, a compression condition of the latter.

### Description of the Illustrated Embodiments

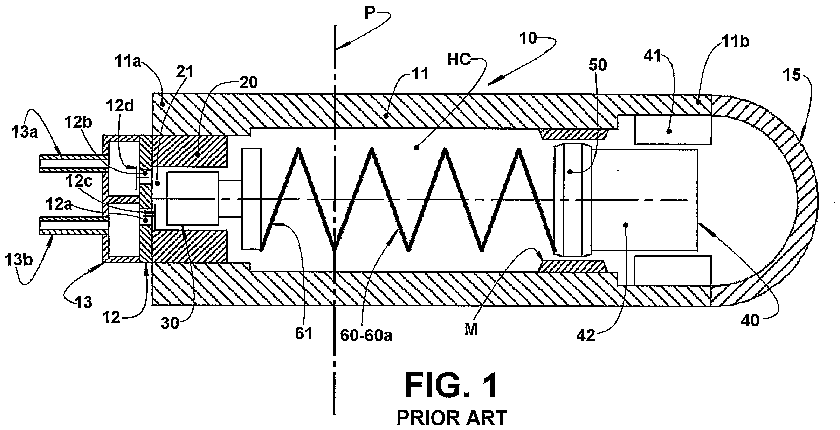

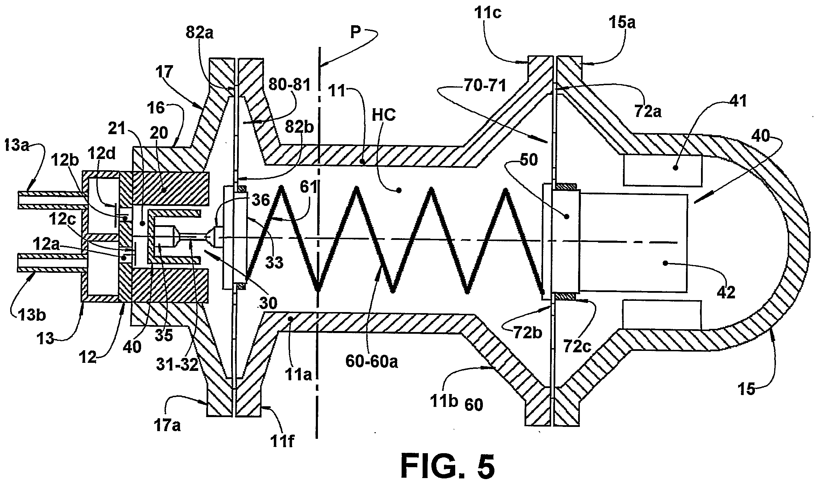

As illustrated in figures 1, 2, 3, 4, 5 and 7, the present invention comprises a compressor for refrigeration systems, for example, a compact compressor of the type to be particularly, but not exclusively, utilized to refrigerate electronic systems, said compressor generally comprising a shell 10; a cylinder 20 internally affixed to the shell 10 and defining a compression chamber 21; a piston 30 reciprocating in the interior of the compression chamber 21 during the operation of the compressor; a linear electric motor 40 having a fixed part 41 internally affixed to the shell 10 and a movable part 42 reciprocating in relation to the fixed part 41; and an actuating means 50 affixed to the movable part 42 of the linear electric motor 40, so as to be driven by said movable part in a reciprocating movement. The actuating means 50 is coupled to the piston 30 by a coupling means 60, so that said actuating means 50 and piston 30 are displaced, in a reciprocating movement during the operation of the compressor.

The piston 30, the actuating means 50, the movable part 42 of the linear electric motor 40 and the elastic means 60a define a resonant movable assembly of the compressor.

In a particular compressor construction, such as that described in co-pending Patent Application WO07/118295 and to which the present invention is applied, the actuating means 50 is coupled to the piston 30 through a coupling means 60 in the form of an elastic means 60a, so that said actuating means 50 and piston 30 are displaced, in a reciprocating movement and in phase opposition, during the operation of the compressor.

Although not illustrated, the present invention can be also applied to a linear compressor which presents the actuating means 50 and the piston 30 constructed to be coupled to each other through a coupling means 60, for example, in the form of a rod or a bundle of rods, so as to be jointly displaced, in phase, upon the reciprocating movement thereof.

In this construction, illustrated in the appended drawings and in which the piston 30 is not directly and rigidly affixed to the actuating means 50, but through an elastic means 60a (causing a reciprocating displacement that does not correspond to the reciprocating displacement of the actuating means 50), the reciprocating movement of the piston 40 is operatively associated with that movement determined for the actuating means 50 by the linear electric motor 40, allowing said piston 30 to present a displacement which is offset or in phase opposition, that is, in a direction opposite to that of the actuating means 50, which displacement may also present an amplitude different from that of the reciprocating displacement of the actuating means 50. This freedom of movement between the piston 30 and the actuating means 50 allows the relative reciprocating displacements to be previously defined, in order to annul the vibrations, in the direction of the reciprocating movement, caused by the displacement of each of said parts. In this type of construction, the displacement amplitudes of the piston 30 are smaller than those associated with the actuating means 50, as a function of the different masses of the two parts associated with the elastic means 60a.

The elastic means 60a, which operatively couples the piston 30 to the actuating means 50 in the illustrated constructions, is defined not only to guarantee the physical coupling between the parts of piston 40 and actuating means 50, but also to determine the transfer of movement from the linear electric motor 40 to the piston 30, in a determined amplitude, frequency and phase relation with the movement of the actuating means 50.

The elastic means 60a presents an axis coaxial to the displacement axis of the piston 30 and is dimensioned as a function of the masses of the piston 30 and of the actuating means 50, and of the desired displacement amplitudes that are predetermined for said parts of actuating means 50 and piston 30. The displacement amplitudes of both the piston 30 and the actuating means 50 are defined in relation to a transversal plane P, orthogonal to the axis of the elastic means 60a, defined at a predetermined distance in relation to a reference point contained in one of the parts of cylinder 20 and shell 10, said amplitudes being calculated to guarantee a determined power for the linear electric motor 50 and a determined gas pumping efficiency for the piston 30.

The elastic means 60a, coupled to the parts of piston 30 and actuating means 50, maintains stationary its region disposed on said transversal plane P, defining a point zero of the amplitude of the compressor operation, in which the vibration caused by the movement of each of the parts of piston 30 and actuating means 50 presents a null resultant, independent of the difference between the amplitudes being balanced.

The determination of the travel amplitude of both the piston 30 and the actuating means 50 is made by determining the masses and the spring constant of the elastic means 60a.

In the compressor constructions in which the travel of the piston 30 is not modified, the displacement amplitude of the actuating means 50 is defined so as to be greater than the displacement amplitude of the piston 30, allowing the desired power to be obtained with an electric motor of reduced dimensions, for example, of smaller diameter, but without the necessary increase of the travel of the actuating means 50 provoking alteration in the travel of the piston 30 and, consequently, in the pumping capacity thereof.

According to a constructive form of the compressor described herein and presented in WO07/11829, the actuating means 50 generally comprises a base portion defined by the movable part 42 of the linear electric motor 40, said base portion and load portion being preferably coaxial to one another and to the axis of the piston 30. In a way of carrying out the present invention, the base portion secures the load portion by a known conventional way, such as adhesive, threads, interference, etc, or incorporates said load portion in a single piece. The load portion (movable part 42 of the linear electric motor 40) carries permanent magnets (not illustrated) of the linear electric motor 40.

For the construction described herein, the elastic means 60a has an end affixed to the piston 30 and an opposite end affixed to the base portion of the actuating means 50. The elastic means 60a can be defined by one or two resonant helical springs with the same helical development direction and having their adjacent ends angularly spaced from each other.

The compressor described herein can comprise or not a positioning element (not illustrated) coupling the region of the elastic means 60a, situated on said transversal plane P, to one of the parts of cylinder 20 and shell 10. For the present compressor construction, the elastic means 60a comprises at least one resonant helical spring with an end coupled to the piston 30 and an opposite end coupled to the actuating means 50. In the constructions in which the elastic means 60a comprises more than two resonant helical springs, these present an angular distribution defining a plane of symmetry (for example with the same spacing) for the adjacent ends of said resonant helical springs.

In the construction illustrated in figure 1, the shell 10 presents, internally, a slide bearing M, which guarantees the alignment of the movable part 42 of the linear electric motor 40 during the operation of the compressor, but which presents the already previously discussed deficiencies. According to the present invention, in which the slide bearing is not used anymore, the compressor comprises a supporting elastic means 70 connecting the actuating means 50 to the shell 10 and presenting a radial rigidity capable to support the lateral loads actuating on the assembly defined by the movable part 42 of the linear electric motor 40 and by the actuating means 50, so as to minimize axial misalignments between said movable part 42 and fixed part 41 of the linear electric motor 40, resulting from the effects of said lateral loads, said supporting elastic means 70 presenting a minimum axial rigidity, so as to allow the desired displacement, in phase opposition, of the piston 30 and the actuating means 50.

The compressor of the present invention can also comprise an additional supporting elastic means 80, coupling one of the parts of piston 30 and elastic means 60a to the shell 10, in the region in which said elastic means 60a is mounted to the piston 30.

The constructive forms and the degree of axial and radial rigidity of each of the parts of supporting elastic means 70 and additional supporting elastic means 80 may or may not be equal, the form and the degree of axial and radial rigidity of each of said supporting elastic means being defined as a function of the involved masses and the convenience of annulling the resultant of the forces that said supporting elastic means 70, 80 exert on the elastic means 60a.

The supporting elastic means 70 and the additional supporting elastic means 80 may be designed so that each present a respective axial rigidity defined so as to annul, jointly with the axial rigidity of the other of said elastic means, the axial forces on the shell 10 during reciprocation of the piston 30 and of the assembly formed by the actuating means 50 and the movable part 42 of the motor 40, upon operation of the compressor

According to a way of carrying out the present invention, the supporting elastic means 70 is defined by at least one spring 71 disposed in a plane orthogonal to the axis of the fixed part 41 of the linear electric motor 40. In a variant of this solution, not illustrated, the supporting elastic means 70 comprises at least one spring 71 having part of its extension, for example that part to be affixed to the shell 10, disposed in a plane orthogonal to the axis of the fixed part 41 of the linear electric motor 40, the remainder of said spring 71 being disposed angularly to said axis of the fixed part 41 of the linear electric motor 40, defining a conical shape to said spring 71.

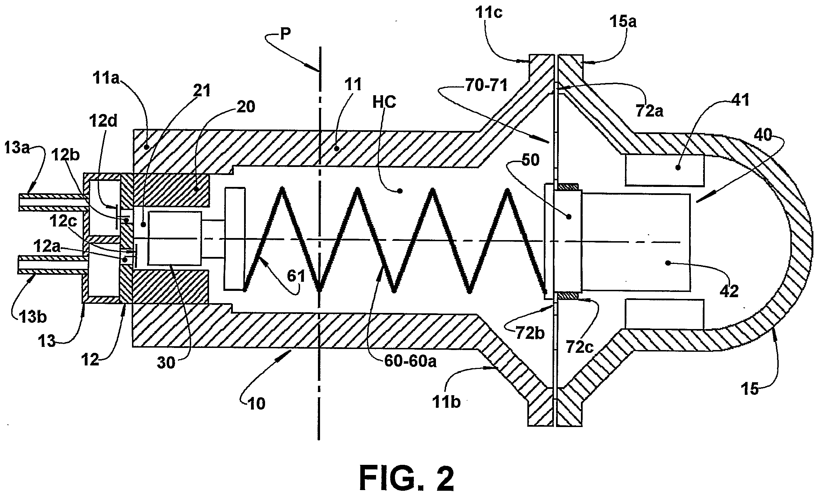

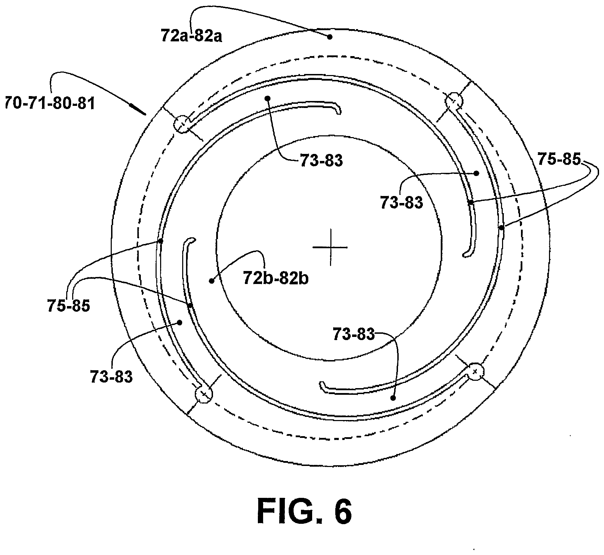

In the construction illustrated in figures 2 to 6, the supporting elastic means 70 is defined by a single flat spring 71, for example comprising two concentric annular portions 72a, 72b, interconnected by a plurality of intermediary portions 73, in a spiral arrangement.

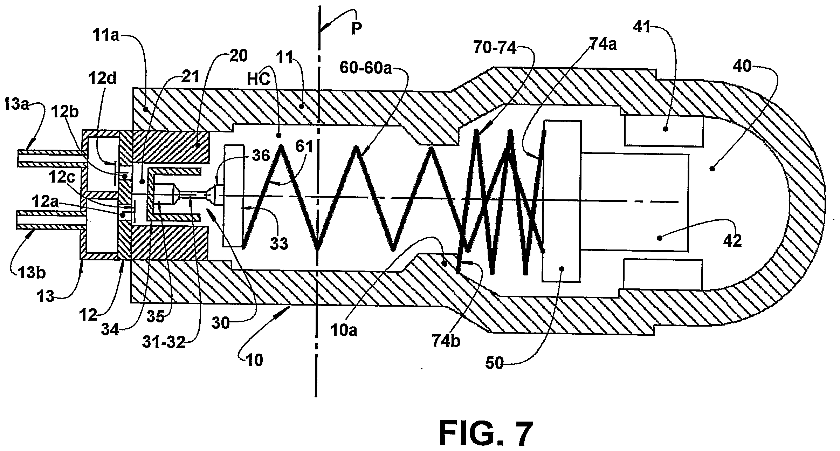

This embodiment of flat spring 71 is defined to present low axial rigidity and high radial rigidity. Moreover, it can be easily obtained, by cutting or stamping a flat metal sheet. Another advantage of this embodiment is its length in the axial direction. Since it is obtained from a metal sheet, the axial dimension is significantly reduced. According to another way of carrying out the present invention, as illustrated in figures 7 to 10, the supporting elastic means 70 is defined by at least one cylindrical helical spring 74, coaxial to the axis of the fixed part 41 of the linear electric motor 40 and having an end 74a coupled to the actuating means 50 and an opposite end 74b coupled to the shell 10. The cylindrical helical spring 74 can be mounted in an end region of the elastic means 60a, adjacent to the actuating means 50, surrounding said end region of the elastic means 60a or also disposed internally to said elastic means 60a. In the embodiment illustrated in figure 7, the cylindrical helical spring 74 is mounted surrounding said end region of the elastic means 60a and has its opposite end 74b mounted seated against a stop portion 10a internally provided in the shell 10.

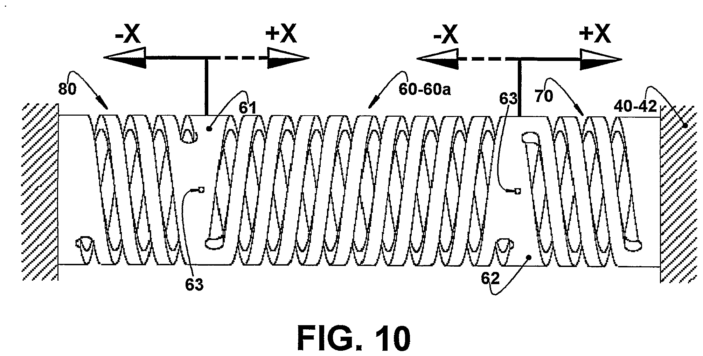

In this embodiment of supporting elastic means 70 in the form of a cylindrical helical spring 74, said supporting elastic means 70 can be defined by one or more helical springs configured to present high radial rigidity and low axial rigidity. The advantage of this embodiment is its radial dimension, which enables reducing the lateral dimensions of the compressor, which can thus be compacted. In the construction of helical springs, the cylindrical helical spring 74 can be obtained in a single piece with the spring which defines the elastic means 60a (figure 10) or provided in a piece separated from the latter. According to the illustrations, the shell 10 comprises an elongated tubular body 11, generally in metallic alloy and internally defining a hermetic chamber HC between the linear electric motor 40 and the cylinder 20, said hermetic chamber HC being open to a first end of the compression chamber 21 and lodging the actuating means 50 and the elastic means 60a.

A valve plate 12, of any known prior art construction, is seated and secured against a second end of the compression chamber 21, closing it.

A head 13 is externally seated and retained against the valve plate 12, providing selective fluid communications between the compression chamber 21 and the suction line 13a and discharge line 13b of a refrigeration circuit, not illustrated, to which the compressor is coupled.

According to the present invention, the head 13 (or also an end cover secured around at least part of the longitudinal extension of the adjacent shell portion surrounding the valve plate 12) is affixed, for example, through adhesives or mechanical interference, to the shell 10.

The valve plate 12, in which a suction orifice 12a and a discharge orifice 12b are defined selectively closed by a respective suction valve 12c and a respective discharge valve 12d, is seated against the second end of the compression chamber 21, closing said compression chamber 21, said second end of the compression chamber 21 being opposed to the one to which the piston 30 is mounted.

In the compressor construction presenting a shell 10, as illustrated in the enclosed drawings, said compressor presents the relatively moving parts thereof constructed to dispense the provision of lubricant oil for the compressor, as well as of a reservoir for said oil and means for pumping it to the parts with relative movement. The relatively moving parts of the compressor are made of a self-lubricant material, such as, for example, some plastics, or made of an antifriction material, or provided with a low friction wear-resistant coating.

In particular, the piston 30 can be produced in a self-lubricant material, such as, for example, some engineering plastics, or in conventional materials coated with low friction wear-resistant surface coating. The compression chamber 21, inside which occurs the displacement of the piston 30, may also receive a sleeve with a coating such as cited above.

Besides reducing the friction between the relatively moving parts, the determination of the material that forms the components of the compressor of the present invention considers balancing issues in the compressor. Within this concept, the compressor being described preferably presents its components made of a material with low mass density, in order to reduce the unbalancing forces coming from the reciprocating movement of the piston 30.

The compressor being described can be utilized in a wide range of rotations, for example from 3.000rpm to 15.000rpm, as a function of its characteristics.

Although the constructions illustrated herein present a fluid communication between the compression chamber 21 and the suction line through a head 13, it should be understood that the present invention can be also applied to compressor constructions, such as those described and illustrated in WO07/118295.

As illustrated, the elongated tubular body 11 of the shell 10 presents a first end 11a, to which the head 13 is affixed and a second end 11b, closed by a motor cover 15. In the prior art construction illustrated in figure 1, the linear electric motor 40 is mounted adjacent to the second end 11b of the elongated tubular body 11 of the shell 10. It should be understood that, for any of the shell constructions described herein or also for those constructions presented in WO07/118295, at least one of the parts of shell 10 and motor cover 15 may also be externally provided with heat exchange fins, for refrigerating the present compressor during operation and for releasing, to the outside of the compressor, the heat that is generated by the motor and by compression of the refrigerant fluid in the compression chamber 21.

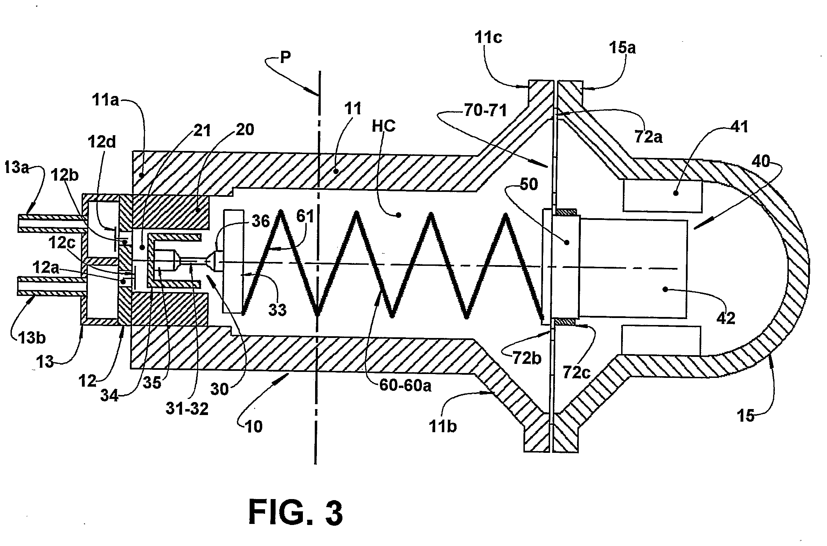

According to a way of carrying out the present invention, as illustrated in figures 2 and 3, the shell 10 is formed in at least two coaxial portions hermetically affixed to each other, one of which defining the elongated tubular body 11 of the shell 10 and, the other, the motor cover 15. For the construction of the supporting elastic means 70 in the form of a flat spring 71, this presents a radially external portion defined by an outer annular portion 72a, affixed between said two shell portions.

In this construction, the second end 11b of the elongated tubular body 11 presents a peripheral flange 11c to be seated against a peripheral flange 15a of an open end portion of the motor cover 15, sandwiching a peripheral edge of the outermost annular portion 72a of the flat spring 71, which defines the supporting elastic means 70 in this construction, by appropriate means and using sealing joints to guarantee the hermeticity of the interior of the shell 10.

In the constructions illustrated in figures 2 to 5, the innermost annular portion 72b of the flat spring 71, comprises a central hub 72c to be tightly mounted around an adjacent portion of the actuating means 50.

In these constructions, the shell 10 presents an enlargement in the fixation region of the motor cover 15, as a function of the diameter of the supporting elastic means 70.

The flat spring 71 illustrated in figures 2 to 6 has its concentric annular portions 72a, 72b interconnected by a plurality of intermediary portions 73, in a spiral arrangement, defined between slots 75 produced in the same spiral development direction, said slots being dimensioned as a function of the rigidity desired for this construction of supporting elastic means 70.

According to another aspect of the present invention, to be applied in the constructions in which the piston 30 is directly coupled to the elastic means 60a, the present compressor comprises an additional supporting elastic means 80, connecting the piston 30 to the shell 10 and presenting a radial rigidity capable to support the lateral loads actuating on the piston 30, so as to minimize axial misalignments of the piston 30 in relation to the compression chamber 21, resulting from the effects of said lateral loads, said additional supporting elastic means 80 presenting a minimum axial rigidity, so as to allow the desired displacement in phase opposition of the piston 30 and of the actuating means 50. In this construction, the additional supporting elastic means 80 minimizes the occurrence, during the compressor operation, of impacts and friction between the piston 30 and the inner wall of the compression chamber 21.

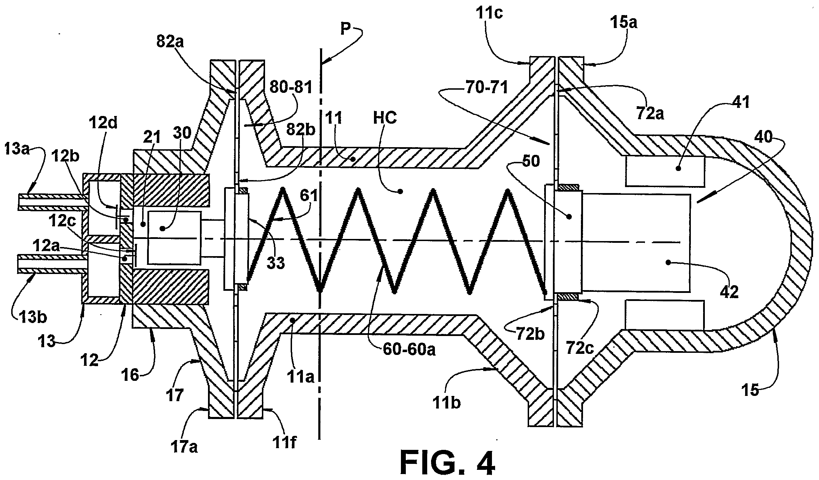

Further according to another aspect of the present invention, the compressor comprises an additional supporting elastic means 80 connecting, to the shell 10, an end portion 61 of the elastic means 60a, adjacent to the piston 30 and presenting a radial rigidity capable to support the lateral loads actuating on said end portion 61 of the elastic means 60a, so as to minimize axial misalignments of the end portion 61 of the elastic means 60a in relation to the compression chamber 21, resulting from the effects of said lateral loads, said additional supporting elastic means 80 presenting a minimum axial rigidity, so as to allow the desired displacement in phase opposition of the piston 30 and of the actuating means 50. For this construction, the piston 30 can be rigidly coupled to the elastic means 60a, as illustrated in figures 2 and 4, or coupled to the elastic means 60a by an articulation means 31, as illustrated in figures 3, 5 and 7.

Figure 10 illustrates a construction utilizing a supporting elastic means 70 and an additional supporting elastic means 80, both provided as spring extensions of the elastic means 60a, particularly in a single piece with the latter, from the end portion 61 of the elastic means 60a and from an opposite end portion 62 of the latter, adjacent to the movable part 42 of the linear electric motor 40.

In this construction, each supporting elastic means 80 is coupled to the shell 10 through, respectively, the end portion 61 and the opposite end portion 62 of the elastic means 60a. In the illustrated construction, in each said end portion 61 and opposite end portion 62, the spring means is provided with a hole 63 for affixing the two supporting elastic means to the shell 10.

Due to this connection to the elastic means 60a, the two supporting elastic means, in this construction, are also submitted to the operational movement of the elastic means 60a. In order to prevent such two supporting elastic means from interfering in the operation of the elastic means 60a, the axial rigidity thereof is calculated considering the axial rigidity of each said supporting elastic means. The supporting elastic means are constructed to present a spring wire with a reduced thickness in the axial direction and a larger thickness in the radial direction, in order to allow obtaining the desired operational behavior for said supporting elastic means. It should be understood that the radial rigidity and the axial rigidity of the supporting elastic means 70 and of the additional supporting elastic means 80 are defined as a function of the loads to which the supporting elastic means 70 or the additional supporting elastic means 80 will be submitted during the compressor operation.

The provision of the articulation means 31 allows preventing that deviations of the elastic means 60a in relation to the piston 30 are transmitted to the latter, which deviations are caused by radial vibrations, resulting from the compression and suction operations of the compressor, and also by possible mounting misalignments (imperfections) of the additional supporting elastic means 80.

In the construction illustrated in figures 3, 5 and 7, the articulation means 31 includes a rod 32 connecting a base portion 33 to a top portion 34 of the piston 30, responsible for the gas compression in the compression chamber 21, said rod 32 being connected between the base portion 33 and the top portion 34 through respective articulations 35, 36, such as, for example, a ball-joint means or an articulated engaging means.

The additional supporting elastic means 80 can present the same constructions already described for the supporting elastic means 70, that is, said additional supporting elastic means 80 can be defined by at least one spring 81, or part thereof, disposed in a plane orthogonal to the axis of the piston 30, said spring 81 being, for example, a single flat spring 81 comprising two concentric annular portions 82a, 82b interconnected by a plurality of intermediary portions 83, in a spiral arrangement.

As already described for the supporting elastic means 70, for this construction of additional supporting elastic means 80, the shell 10 is formed in at least two coaxial portions hermetically affixed to each other, said at least one spring 81, or part thereof, having one of its annular portions 82a, the radially external one, affixed between said two portions of shell.

In this case, the shell 10 presents three coaxial portions hermetically affixed to each other, two of which already described and respectively defined by the elongated tubular body 11 and motor cover 15, and the other coaxial portion being defined by an end portion 16 to be mounted to the cylinder 20, said end portion 16 being provided with an enlarged peripheral edge 17 defining an end flange 17a, for the seating and mounting of a flange portion 11f of the first end 11a of the elongated tubular body 11 of the shell 10. The construction and mounting of this other flat spring 81 follows the same characteristics as that described for the flat spring 71, mounted to the actuating means 50, that is, said other flat spring 81 presents its outermost annular portion 82a affixed between the shell portions defined by the elongated tubular body 11 and peripheral edge 17 of the end portion 16.

In this construction of additional supporting elastic means 80, the shell 10 also presents an enlargement of its elongated tubular body 11, adjacent to its first end 11a, in the mounting region of the end portion 16.

As already described for the supporting elastic means 70, the additional supporting elastic means 80 can also be defined by at least one cylindrical helical spring 84, coaxial to the axis of the piston 30 and having an end coupled to the latter and an opposite end coupled to the shell 10.

In this case, the cylindrical helical spring 84 can surround an end region of the elastic means 60a, adjacent to the actuating means 50, or also said cylindrical helical spring 84 can be configured to be surrounded by said end region of the elastic means 60a. The cylindrical helical spring can be provided either in a separate piece or in a single piece with the elastic means 60a.

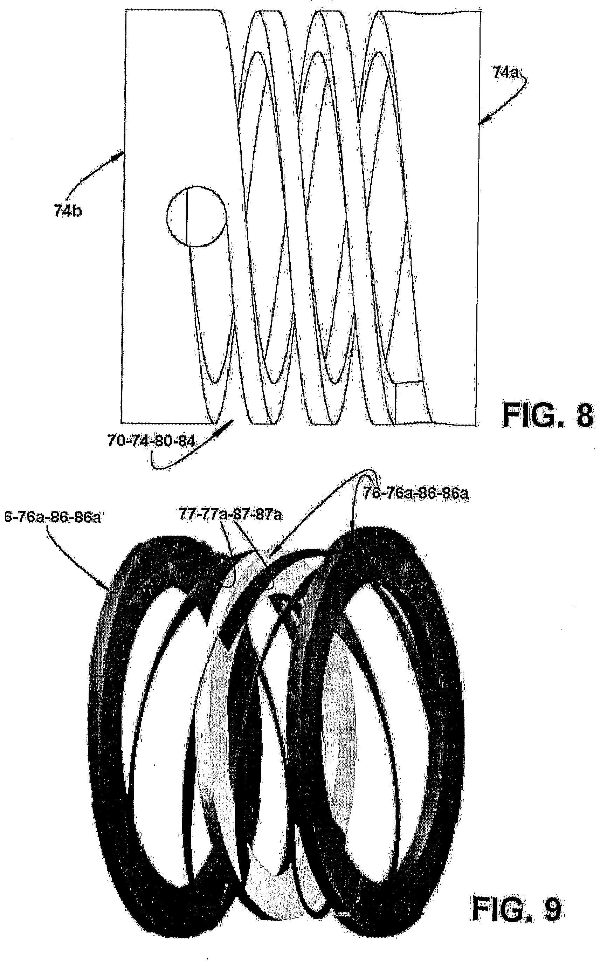

It should be understood that, within the concept of the invention presented herein, other embodiments for the supporting elastic means 70 and additional supporting elastic means 80 (not illustrated) are possible, not presenting the latter simultaneously provided with the same spring construction, such as presenting one of said parts of supporting elastic means 70 and additional supporting elastic means 80 in the form of a flat spring, whilst the other of said parts in the form of a helical spring. According to the constructive option illustrated in figure 9 for the cylindrical helical spring, this comprises coils 76, 86, affixed to each other through helical spring elements 77, 87. In this construction, the cylindrical helical spring is formed by three rings 76a, 86a, and a plurality of strips 77a, 87a affixed in slots of the rings. The outer rings are fixed and the central ring is the movable one. In the embodiment in which only one spring is employed to define the supporting elastic means 70, the central ring 76, 76a, 86, 86a of this helical spring construction is affixed to the actuating means 50, and the two outer rings can be affixed to the shell 10 of the compressor. Likewise, this assembly can be mounted in both sides of the resonant spring, completely supporting the mechanism.

The axial rigidity of the construction presenting the supporting elastic means 70 and the additional supporting elastic means 80 is used to balance the vibration of the compressor. Since the piston 30 and the linear electric motor 40 move coaxially and in opposite directions to each other, the reaction force of one of the supporting elastic means 70 and additional supporting elastic means 80 against the shell 10 of the compressor is nullified by the other of said supporting elastic means 70 and additional supporting elastic means 80 which is operating in the opposite direction. For this neutralization of forces, it is necessary that the product of rigidity X travel of the supporting elastic means (or additional supporting elastic means) be equal for the two supporting elastic means in operation.

The use of the two supporting elastic means can affect the main resonant system of the compressor with the additional rigidity in the ends of said two supporting elastic means. This interference must be limited in order not to interfere in the transfer of energy from the motor to the piston.

The two supporting elastic means described herein can be employed only to support the mechanism at the side of the linear electric motor 40 (supporting elastic means 70), or they can also be employed at the side of the piston 30 (additional supporting elastic means 80) suspending the whole mechanism through springs.

The construction of articulated piston 30 can be used jointly with the two supporting elastic means described herein, in order to prevent mounting misalignments from generating undesired forces on the piston 30.

The advantage of using supporting elastic means is the low energy loss thereof, as it occurs only in a very small degree upon deformation of the spring structure. Since there is no friction between the components, it is not necessary to use oil for operation thereof, which fact, besides the ecological aspect involved, imparts versatility to the compressor application, by allowing said compressor to operate in any position.

## Claims

1. A linear compressor comprising
- a shell (10) which affixes, internally, a cylinder (20) defining a compression chamber (21) in whose interior is provided a piston (30);
- a linear electric motor (40) having a fixed part (41) internally affixed to the shell (10) and a movable part (42) reciprocating in relation to the fixed part (41);
- an actuating means (50) affixed to the movable part (42) of the linear electric motor (40), to be driven by said movable part (42) in a reciprocating movement;
- a coupling means (60) coupling the actuating means (50) to the piston (30), so that said coupling means (60), said actuating means (50) and said piston (30) are displaced, as a resonant movable assembly, in a reciprocating movement, during the operation of the compressor;
- a supporting elastic means (70) connecting the actuating means (50) to the shell (10) and presenting a radial rigidity for radially supporting the lateral loads actuating on the assembly defined by the movable part (42) of the linear electric motor (40) and by the actuating means (50), and for compensating axial misalignments between said movable (42) and fixed (41) parts of the linear electric motor (40), resulting from the effects of said lateral loads, said supporting elastic means (70) presenting an axial rigidity, adapted for the desired displacement of the piston (30) and the actuating means (50); **characterised in that**
- the coupling means (60) is an elastic means (60a), and **in that** the supporting elastic means (70), connecting the actuating means (50) to the shell (10), presents an axial rigidity adapted for said actuating means (50) and piston (30) to be displaced, in a reciprocating movement and in phase opposition, during the compressor operation.

2. The compressor, as set forth in claim 1, **characterized in that** the supporting elastic means (70) is defined by at least one spring (71), or a spring portion, disposed in a plane orthogonal to the axis of the fixed part (41) of the linear electric motor (40).

3. The compressor, as set forth in claim 2, **characterized in that** the supporting elastic means (70) is defined by a single flat spring (71) comprising two concentric annular portions (72a, 72b) interconnected by a plurality of intermediary portions (73) in a spiral arrangement.

4. The compressor, as set forth in any of claims 2 or 3, **characterized in that** the shell (10) is formed in at least two coaxial portions hermetically affixed to each other, said at least one spring (71) having a radially outer portion (72a) affixed between said two shell portions.

5. The compressor, as set forth in any claim 1, the supporting elastic means (70) is defined by at least one cylindrical helical spring (74), which is coaxial to the axis of the fixed part (41) of the linear electric motor (40) and having an end (74a) coupled to the actuating means (50) and an opposite end (74b) coupled to the shell (10).

6. The compressor, as set forth in claim 5, **characterized in that** the cylindrical helical spring (74) surrounds an end region of the coupling means (60), adjacent to the actuating means (50).

7. The compressor, as set forth in any one of claims 1 to 6, in which the piston (30) is directly coupled to the elastic means (60a), **characterized in that** it comprises an additional supporting elastic means (80) connecting the piston (30) to the shell (10) and presenting a radial rigidity for radially supporting the lateral loads actuating on the piston (30), and for compensating axial misalignments of the piston (30) in relation to the compression chamber (21), resulting from the effects of said lateral loads, said additional supporting elastic means (80) presenting an axial rigidity, adapted for the desired displacement, in phase opposition, of the piston (30) and of the actuating means (50).

8. The compressor, as set forth in any one of claims 1 to 6, **characterized in that** it comprises an additional supporting elastic means (80) connecting, to the shell (10), an end portion (61) of the elastic means (60a), adjacent to the piston (30) and presenting a radial rigidity for radially supporting the lateral loads actuating on said end portion (61) of the elastic means (60a), and for compensating axial misalignments of the end portion (61) of the elastic means (60a) in relation to the compression chamber (21), resulting from the effects of said lateral loads, said additional supporting elastic means (80) presenting an axial rigidity, adapted for the desired displacement, in phase opposition, of the piston (30) and of the actuating means (50).

9. The compressor, as set forth in any of claims 7 or 8, **characterized in that** the piston (30) is rigidly coupled to the elastic means (60a).

10. The compressor, as set forth in any of claims 7 or 8, **characterized in that** the piston (30) is coupled to elastic means (60a) by an articulation means (31).

11. The compressor, as set forth in any of claims 7 or 8, **characterized in that** the supporting elastic means (70) and the additional supporting elastic means (80) each present a respective axial rigidity defined to annul, jointly with the axial rigidity of the other of said elastic means, the axial forces on the shell (10).

12. The compressor, as set forth in any of claims 7, 8, 9, 10 or 11, **characterized in that** the additional supporting elastic means (80) is defined by at least one spring (81) disposed in a plane orthogonal to the axis of the piston (30) .

13. The compressor, as set forth in claim 12, **characterized in that** the additional supporting elastic means (80) is defined by a single flat spring (81).

14. The compressor, as set forth in claim 13, **characterized in that** the single flat spring (81) comprises two concentric annular portions (82a, 82b) interconnected by a plurality of intermediary portions (83), in a spiral arrangement.

15. The compressor, as set forth in any of claims 12, 13 or 14, **characterized in that** the shell (10) is formed in at least two coaxial portions hermetically affixed to each other, said at least one spring (81) having a radially outer portion (82a) affixed between said two shell portions.

16. The compressor, as set forth in any of claims 7, 8, 9, 10 or 11, **characterized in that** the additional supporting elastic means (80) is defined by at least one cylindrical helical spring (84), coaxial to the axis of the piston (30) and having an end coupled to the latter and an opposite end coupled to the shell (10).

17. The compressor, as set forth in claim 16, **characterized in that** the cylindrical helical spring (84) surrounds an end region of the elastic means (60a), adjacent to the actuating means (50).

## Patentansprüche

1. Ein Linearkompressor, der folgendes umfaßt:
- ein Gehäuse (10), in dem im Inneren ein Zylinder (20) angebracht ist, der eine Verdichtungskammer (21) festlegt, in deren Innerem ein Kolben (30) vorgesehen ist;
- einen linearen Elektromotor (40), der ein feststehendes Teil (41), das im Inneren an dem Gehäuse (10) befestigt ist, und ein bewegliches Teil (42) aufweist, das relativ zu dem festen Teil (41) hin- und herläuft,
- eine Betätigungseinrichtung (50), die an dem beweglichen Teil (42) des linearen Elektromotors (40) befestigt ist, um von dem beweglichen Teil (42) in einer hin- und hergehenden Bewegung angetrieben zu werden;
- eine Koppeleinrichtung (60), welche die Betätigungseinrichtung (50) an den Kolben (30) ankoppelt, so daß die Kopplungseinrichtung (60), die Betätigungseinrichtung (50) und der Kolben (30) als eine bewegliche Resonanzanordnung in einer hin- und hergehenden Bewegung während des Betriebs des Kompressors versetzt werden;
- eine elastische Stützeinrichtung (70), welche die Betätigungseinrichtung (50) mit dem Gehäuse (10) verbindet und eine radiale Steifigkeit zum radialen Abstützen der seitlichen Belastungen aufweist, die auf die von dem beweglichen Teil (42) des linearen Elektromotors (40) und von der Betätigungseinrichtung (50) festgelegte Anordnung wirken, und zum Ausgleich axialer Fehlausrichtungen zwischen dem beweglichen Teil (42) und dem feststehenden Teil (41) des linearen Elektromotors (40), die aus den Wirkungen der seitlichen Belastungen resultieren, wobei die elastische Stützeinrichtung (70) eine axiale Steifigkeit umfaßt, die für die gewünschte Verschiebung des Kolbens (30) und der Betätigungseinrichtung (50) ausgelegt ist, **dadurch gekennzeichnet, daß**
- die Koppeleinrichtung (60) eine elastische Einrichtung (60a) ist und daß die elastische Stützeinrichtung (70), welche die Betätigungseinrichtung (50) mit dem Gehäuse (10) verbindet, eine axiale Steifigkeit aufweist, die dazu ausgelegt ist, daß die Betätigungseinrichtung (50) und der Kolben (30) in einer hin- und hergehenden Bewegung und in gegenläufiger Phase während der Betätigung des Kompressors ausgelegt ist.

2. Der Kompressor nach Anspruch 1, **dadurch gekennzeichnet, daß** die elastische Stützeinrichtung (70) durch wenigstens eine Feder (71) oder einen Federabschnitt festgelegt wird, die bzw. der in einer Ebene senkrecht zur Achse des feststehenden Teiles (41) des linearen Elektromotors (40) angebracht ist.

3. Der Kompressor nach Anspruch 2, **dadurch gekennzeichnet, daß** die elastische Stützeinrichtung (70) von einer einzelnen flachen Feder (71) festgelegt wird, die zwei konzentrische Kreisabschnitte (72a, 72b) umfaßt, welche durch eine Vielzahl von Zwischenabschnitten (73) in einer spiralförmigen Anordnung verbunden sind.

4. Der Kompressor nach einem der Ansprüche 2 oder 3, **dadurch gekennzeichnet, daß** das Gehäuse (10) aus wenigstens zwei koaxialen Abschnitten gebildet ist, die hermetisch aneinander befestigt sind, wobei die wenigstens eine Feder (71) einen radialen äußeren Abschnitt (72a) aufweist, der zwischen den beiden Gehäuseabschnitten angebracht ist.

5. Der Kompressor nach Anspruch 1, wobei die elastische Stützeinrichtung (70) durch wenigstens eine zylindrische Spiralfeder (74) festgelegt ist, die koaxial zur Achse des feststehenden Teils (41) des linearen Elektromotors (40) angebracht ist und ein Ende (74a), das an die Betätigungseinrichtung (50) angekoppelt ist, und ein entgegengesetztes Ende (74b) aufweist, das an dem Gehäuse (10) befestigt ist.

6. Der Kompressor nach Anspruch 5, **dadurch gekennzeichnet, daß** die zylindrische Spiralfeder (74) einen Endbereich der Kopplungseinrichtung (60) benachbart der Betätigungseinrichtung (50) umgibt.

7. Der Kompressor nach einem der Ansprüche 1 bis 6, bei dem der Kolben (30) direkt an die elastische Einrichtung (60a) angeschlossen ist, **dadurch gekennzeichnet, daß** eine zusätzliche elastische Stützeinrichtung (80) vorgesehen ist, welche den Kolben (30) an dem Gehäuse (10) befestigt und eine radiale Steifigkeit zur radialen Abstützung der seitlichen Belastungen, die auf den Kolben (30) wirken, und zur Kompensation axialer Fehlausrichtungen des Kolbens (30) relativ zu der Verdichtungskammer (21) aufweist, die von den Wirkungen dieser seitlichen Belastungen resultieren, wobei diese zusätzliche elastische Stützeinrichtung (80) eine axiale Steifigkeit aufweist, die für die gewünschte Bewegung des Kolbens (30) und der Betätigungseinrichtung (50), in gegenläufigen Phasen, ausgelegt sind.

8. Der Kompressor nach einem der Ansprüche 1 bis 6, **dadurch gekennzeichnet, daß** er eine zusätzliche elastische Stützeinrichtung (80) umfaßt, die einen Endabschnitt (61) der elastischen Einrichtung (60a) benachbart dem Kolben (30) an dem Gehäuse (10) befestigt und eine radiale Steifigkeit zur radialen Abstützung der seitlichen Belastungen, die auf diesen Endabschnitt (61) der elastischen Einrichtung (60a) einwirken, und zur Kompensation axialer Fehlstellungen des Endabschnitts (61) der elastischen Einrichtung (60a) relativ zu der Verdichtungskammer (21), die von den Wirkungen der seitlichen Belastungen resultieren, aufweist, wobei diese zusätzliche elastische Stützeinrichtung (80) eine axiale Steifigkeit aufweist, die für die gewünschte Bewegung des Kolbens (30) und der Betätigungseinrichtung (50), in gegenläufiger Phase, ausgelegt ist.

9. Der Kompressor nach einem der Ansprüche 7 oder 8, **dadurch gekennzeichnet, daß** der Kolben (30) an der elastischen Einrichtung (60a) starr angekoppelt ist.

10. Der Kompressor nach einem der Ansprüche 7 oder 8, **dadurch gekennzeichnet, daß** der Kolben (30) an der elastischen Einrichtung (60a) über Gelenkmittel (31) angekoppelt ist.

11. Der Kompressor nach einem der Ansprüche 7 oder 8, **dadurch gekennzeichnet, daß** die elastische Stützeinrichtung (70) und die zusätzliche elastische Stützeinrichtung (80) jeweils eine entsprechende axiale Steifigkeit aufweisen, die so festgelegt ist, daß sie, zusammen mit der axialen Steifigkeit der anderen dieser elastischen Einrichtungen, die axialen Kräfte auf das Gehäuse (10) aufhebt.

12. Der Kompressor nach einem der Ansprüche 7, 8, 9, 10 oder 11, **dadurch gekennzeichnet, daß** die zusätzliche elastische Stützeinrichtung (80) von wenigstens einer Feder (81) festgelegt ist, die in einer Ebene senkrecht zur Achse des Kolbens (30) angebracht ist.

13. Der Kompressor nach Anspruch 12, **dadurch gekennzeichnet, daß** die zusätzliche elastische Stützeinrichtung (80) von einer einzelnen flachen Feder (81) festgelegt ist.

14. Der Kompressor nach Anspruch 13, **dadurch gekennzeichnet, daß** die einzelne flache Feder (81) zwei konzentrische kreisförmige Abschnitte (82a, 82b) umfaßt, die durch eine Vielzahl von Zwischenabschnitten (83) in einer Spiralanordnung aneinander befestigt sind.

15. Der Kompressor nach einem der Ansprüche 12, 13 oder 14, **dadurch gekennzeichnet, daß** das Gehäuse (10) aus wenigstens zwei koaxialen Abschnitten gebildet ist, die hermetisch aneinander befestigt sind, wobei die wenigstens eine Feder (81) einen radialen Außenabschnitt (82a) umfaßt, der zwischen den beiden Gehäuseabschnitten befestigt ist.

16. Der Kompressor nach einem der Ansprüche 7, 8, 9, 10 oder 11, **dadurch gekennzeichnet, daß** die zusätzliche elastische Stützeinrichtung (80) von wenigstens einer zylindrischen Schraubenfeder (84) festgelegt ist, die koaxial zur Achse des Kolbens (30) verläuft und ein Ende, das an dem letzteren befestigt ist, und ein entgegengesetztes Ende, das an dem Gehäuse (10) befestigt ist, aufweist.

17. Der Kompressor nach Anspruch 16, **dadurch gekennzeichnet, daß** die zylindrische Spiralfeder (84) einen Endbereich der elastischen Einrichtung (60a), benachbart der Betätigungseinrichtung (50), umgibt.

## Revendications

1. Compresseur linéaire comprenant :
- une enveloppe (10) dans laquelle est fixé, intérieurement, un cylindre (20) définissant une chambre de compression (21) à l'intérieur de laquelle est prévu un piston (30) ;
- un moteur électrique linéaire (40) ayant une partie fixe (41) fixée intérieurement à l'enveloppe (10) et une partie mobile (42) se déplaçant en un mouvement de va-et-vient relativement à la partie fixe (41) ;
- un moyen d'actionnement (50) fixé à la partie mobile (42) du moteur électrique linéaire (40), de façon à être entraîné par ladite partie mobile (42) dans un mouvement de va-et-vient ;
- un moyen d'accouplement (60) accouplant le moyen d'actionnement (50) au piston (30), de manière à ce que ledit moyen d'accouplement (60), ledit moyen d'actionnement (50) et ledit piston (30) soient déplacés, comme un ensemble mobile résonant, dans un mouvement de va-et-vient, pendant le fonctionnement du compresseur ;
- un moyen élastique de support (70) reliant le moyen d'actionnement (50) à l'enveloppe (10) et présentant une rigidité radiale pour supporter radialement les charges latérales agissant sur l'ensemble défini par la partie mobile (42) du moteur électrique linéaire (40) et par le moyen d'actionnement (50), et pour compenser les désalignements axiaux entre lesdites parties mobile (42) et fixe (41) du moteur électrique linéaire (40), résultant des effets desdites charges latérales, ledit moyen élastique de support (70) présentant une rigidité axiale, adaptée pour le déplacement désiré du piston (30) et du moyen d'actionnement (50) ;
**caractérisé en ce que**
- le moyen d'accouplement (60) est un moyen élastique (60a), et **en ce que** le moyen élastique de support (70), reliant le moyen d'actionnement (50) à l'enveloppe (10), présente une rigidité axiale adaptée pour que lesdits moyen d'actionnement (50) et piston (30) soient déplacés, dans un mouvement de va-et-vient et en opposition de phase, pendant le fonctionnement du compresseur.

2. Compresseur, selon la revendication 1, **caractérisé en ce que** le moyen élastique de support (70) est défini par au moins un ressort (71), ou une partie de ressort, disposé dans un plan orthogonal à l'axe de la partie fixe (41) du moteur électrique linéaire (40).

3. Compresseur, selon la revendication 2, **caractérisé en ce que** le moyen élastique de support (70) est défini par un seul ressort plat (71) comportant deux parties annulaires concentriques (72a, 72b) interconnectées par une pluralité de parties intermédiaires (73) dans une disposition en spirale.

4. Compresseur, selon l'une quelconque des revendications 2 ou 3, **caractérisé en ce que** l'enveloppe (10) est formée dans au moins deux parties coaxiales fixées hermétiquement l'une à l'autre, ledit au moins un ressort (71) ayant une partie radialement extérieure (72a) fixée entre lesdites deux parties de l'enveloppe.

5. Compresseur, selon l'une quelconque des revendications 1, le moyen élastique de support (70) est défini par au moins un ressort hélicoïdal cylindrique (74), qui est coaxial à l'axe de la partie fixe (41) du moteur électrique linéaire (40) et ayant une extrémité (74a) accouplée au moyen d'actionnement (50) et une extrémité opposée (74b) accouplée à l'enveloppe (10).

6. Compresseur, selon la revendication 5, **caractérisé en ce que** le ressort hélicoïdal cylindrique (74) entoure une région extrême du moyen d'accouplement (60), adjacente au moyen d'actionnement (50).

7. Compresseur, selon l'une quelconque des revendications 1 à 6, dans lequel le piston (30) est accouplé directement au moyen élastique (60a), **caractérisé en ce qu'**il comporte un moyen élastique de support supplémentaire (80) reliant le piston (30) à l'enveloppe (10) et présentant une rigidité radiale pour supporter radialement les charges latérales agissant sur le piston (30), et pour compenser les désalignements axiaux du piston (30) par rapport à la chambre de compression (21), résultant des effets desdites charges latérales, ledit moyen élastique de support supplémentaire (80) présentant une rigidité axiale, adaptée pour le déplacement désiré, en opposition de phase, du piston (30) et du moyen d'actionnement (50).

8. Compresseur, selon l'une quelconque des revendications 1 à 6, **caractérisé en ce qu'**il comporte un moyen élastique de support supplémentaire (80) reliant, à l'enveloppe (10), une partie extrême (61) du moyen élastique (60a), adjacente au piston (30) et présentant une rigidité radiale pour supporter radialement les charges latérales agissant sur ladite partie extrême du moyen élastique (60a), et pour compenser les désalignements axiaux de la partie extrême (61) du moyen élastique (60a) par rapport à la chambre de compression (21), résultant des effets desdites charges latérales, ledit moyen élastique de support supplémentaire (80) présentant une rigidité axiale, adaptée pour le déplacement désiré, en opposition de phase, du piston (30) et du moyen d'actionnement (50).

9. Compresseur, selon l'une quelconque des revendications 7 ou 8, **caractérisé en ce que** le piston (30) est accouplé rigidement au moyen élastique (60a).

10. Compresseur, selon l'une quelconque des revendications 7 ou 8, **caractérisé en ce que** le piston (30) est accouplé au moyen élastique (60a) par un moyen d'articulation (31).

11. Compresseur, selon l'une quelconque des revendications 7 ou 8, **caractérisé en ce que** le moyen élastique de support (70) et le moyen élastique de support supplémentaire (80) présentent chacun une rigidité axiale respective définie de façon à annuler, conjointement avec la rigidité axiale de l'autre desdits moyens élastiques, les forces axiales sur l'enveloppe (10).

12. Compresseur, selon l'une quelconque des revendications 7, 8, 9, 10 ou 11, **caractérisé en ce que** le moyen élastique de support supplémentaire (80) est défini par au moins un ressort (81) disposé dans un plan orthogonal à l'axe du piston (30).

13. Compresseur, selon la revendication 12, **caractérisé en ce que** le moyen élastique de support supplémentaire (80) est défini par un seul ressort plat (81).

14. Compresseur, selon la revendication 13, **caractérisé en ce que** le seul ressort plat (81) comporte deux parties annulaires concentriques (82a, 82b) interconnectées par une pluralité de parties intermédiaires (83) dans une disposition en spirale.

15. Compresseur, selon l'une quelconque des revendications 12, 13 ou 14, **caractérisé en ce que** l'enveloppe (10) est formée en au moins deux parties coaxiales fixées hermétiquement l'une à l'autre, ledit au moins un ressort (81) ayant une partie radialement extérieure (82a) fixée entre lesdites deux parties de l'enveloppe.

16. Compresseur, selon l'une quelconque des revendications 7, 8, 9, 10 ou 11, **caractérisé en ce que** le moyen élastique de support supplémentaire (80) est défini par au moins un ressort hélicoïdal cylindrique (84), qui est coaxial à l'axe du piston (30) et ayant une extrémité accouplée à celui-ci et une extrémité opposée accouplée à l'enveloppe (10).

17. Compresseur, selon la revendication 16, **caractérisé en ce que** le ressort hélicoïdal cylindrique (84) entoure une région extrême du moyen élastique (60a), adjacente au moyen d'actionnement (50).
